# FASCICULE DE BREVET EUROPEEN

(11) **EP 1 813 830 B1**
(45) Date de publication et mention de la délivrance du brevet: **06.10.2010**
(21) Numéro de dépôt: 07300752.8
(22) Date de dépôt: 29.01.2007
(51) Int. Cl.: F16D 3/04

(54) **Pièce en matière plastique formant noix d'oldham**
Kunststoffteil, das eine Oldham-Kupplung bildet
Part made from plastic material forming an Oldham nut

(30) Priorité: 27.01.2006 FR 0600779
(43) Date de publication de la demande: 01.08.2007
(73) Titulaire: Compagnie Plastic Omnium, 69007 Lyon (FR)
(72) Inventeur: Agnus, Bruno, 52000 Chamarandes Choignes (FR); Pionnier, Jérôme, 52800, NOGENT (FR)
(74) Mandataire: Remy, Vincent Noel Paul

(56) Documents cités:
- EP-A- 0 584 400
- EP-A- 1 069 330
- WO-A-93/09358

## Description

La présente invention concerne une pièce en matière plastique formant une noix d'Oldham.

Une telle pièce est couramment utilisée dans des véhicules automobiles, notamment dans le système de direction assistée, et a pour fonction de fournir une transmission homocinétique entre deux arbres rotatifs en vis-à-vis dont les axes ne sont pas rigoureusement coaxiaux, ce qui interdit de les solidariser par une liaison rigide.

On connaît du document WO 93/09358 une pièce conforme au préambule de la revendication 1.

On connaît par ailleurs une pièce de forme essentiellement cylindrique et comportant un premier orifice de section allongée ménagé dans une première moitié du cylindre, cet orifice débouchant sur une première base de celui-ci, et un second orifice de section allongée ménagé dans une seconde moitié du cylindre, débouchant sur une seconde base de celui-ci, opposée à la première. Les directions longitudinales des sections des deux orifices sont perpendiculaires.

La pièce réalise ainsi un accouplement entre les deux arbres engagés chacun dans un orifice, chaque arbre étant lui-même de section allongée de façon à être bloqué en rotation dans son orifice mais libre de glisser selon la direction longitudinale de celui-ci.

Cette pièce constitue donc un joint qui subit de nombreuses sollicitations mécaniques et qui est généralement réalisée en métal.

On connaît toutefois un telle pièce réalisée en PEEK (Polyetherethercétone), matière plastique possédant des propriétés mécaniques suffisamment proches de celles d'un métal pour que la pièce en PEEK ainsi réalisée remplace la pièce métallique de façon tout à fait satisfaisante.

Une difficulté mineure est toutefois apparue avec les pièces en PEEK : du fait de la température de fusion très élevée du PEEK, il se produit un retrait non négligeable lors du refroidissement de la pièce, à l'issue de son moulage par injection.

Or, les variations d'épaisseur de matière plastique en différents points de la pièce entraînent des différences de retrait, lesquelles différences engendrent des défauts de forme et des retassures, gênants compte tenu du niveau de précision dimensionnel souhaité pour ce type de pièce.

Dans la présente description, on définit par l'expression « épaisseur de matière plastique en un point de la pièce », la dimension minimale de la matière plastique au voisinage de ce point selon toutes les directions passant par ce point.

Ainsi, un taux de rebut relativement important est constaté lors de la fabrication de telles pièces, ce qui n'affecte pas la qualité des pièces acceptées mais augmente leur prix de revient unitaire.

La présente invention a pour objet diminuer le rebut lors de la fabrication.

A cet effet, l'invention a pour objet une pièce conforme à la revendication 1.

Ainsi, par rapport à la pièce de l'état de la technique, dans laquelle l'épaisseur de matière variait considérablement selon le point en lequel elle était mesurée, la pièce selon l'invention est d'épaisseur relativement homogène. Elle est même d'épaisseur constante pour la majorité de ses points. Cela permet de diminuer la quantité de défauts dus au retrait.

Ainsi, il est possible de diminuer le taux de rebut des pièces selon l'invention lors de leur fabrication et donc d'en réduire les coûts de fabrication.

De plus, la diminution de l'épaisseur de matière permet de diminuer le risque d'apparition d'inclusions d'air lors du moulage, les inclusions d'air étant préjudiciables à la tenue mécanique de la pièce. Ainsi, le taux de rebut de ces pièces lors de la fabrication est encore amélioré.

En outre, les coûts de fabrication des pièces selon l'invention sont également diminués du fait de l'économie de matière effectuée.

Avantageusement, la pièce selon l'invention comprend au moins une nervure de renfort d'un seul tenant avec au moins un conduit entourant un orifice de ladite pièce.

Ainsi, malgré la fragilisation apparente de la pièce en raison de l'économie de matière effectuée, les inventeurs à la base de l'invention se sont aperçus que l'ajout de nervures de renfort sur celle-ci permettait d'améliorer ses propriétés mécaniques jusqu'à un niveau suffisant pour son utilisation dans les conditions actuelles.

Optionnellement, la nervure s'étend à l'extérieur du conduit, sur toute la profondeur du conduit.

On entend par « profondeur » la dimension du conduit selon son axe.

Optionnellement, la nervure est constituée par un disque formant un fond au moins partiel pour les orifices de la pièce.

Avantageusement, la pièce est fabriquée en matériau polymère chargé de fibres de verre ou de carbone, ce qui permet d'améliorer les propriétés mécaniques intrinsèques de cette pièce.

Optionnellement, le polymère est du PEEK (Polyetherethercétone), du PA (Polyamide), du PPA (Polyphtalamide), du PPS (Polysulfure de Phénylène), du PAI (Polyamide-imide) ou du PEI (Polyetherimide).

Dans un mode de réalisation particulier, la pièce selon l'invention est destinée à être mise en oeuvre dans un système de direction assistée.

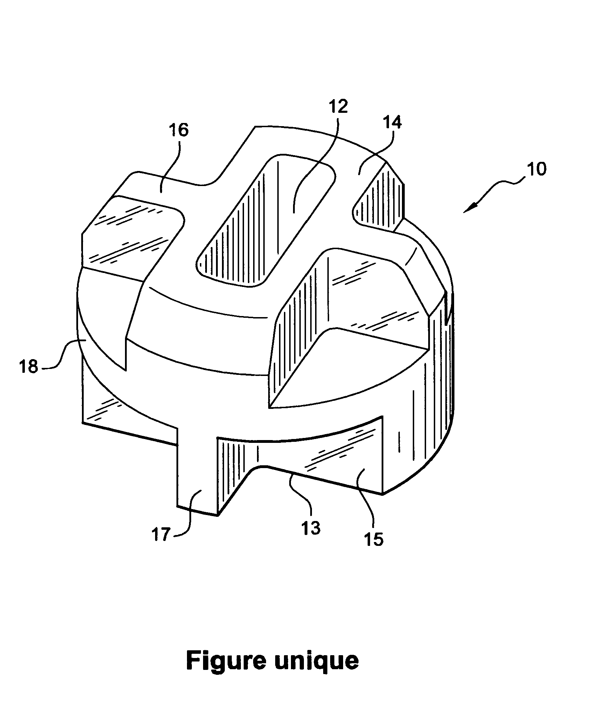

L'invention sera mieux comprise à la lecture de la description qui va suivre, donnée uniquement à titre d'exemple, ne présentant donc aucun caractère limitatif, et faite en se référant à la figure unique représentant une vue en perspective de la pièce selon un mode de réalisation de l'invention.

Sur la figure, une pièce 10 en matière plastique formant noix d'Oldham est représentée. La pièce 10 est de forme essentiellement cylindrique. Elle est fabriquée en matériau polymère chargé de fibres de verre ou de carbone, plus particulièrement en polyamide (PA) ou en polyphtalamide (PPA). Son encombrement n'est pas supérieur à celui des pièces classiques. Une telle pièce est notamment destinée à être mise en oeuvre dans un système de direction assistée.

La pièce 10 comprend deux orifices 12, 13 coaxiaux, destinés chacun à recevoir un arbre rotatif. Un premier orifice 12 est ménagé dans une première partie, ou moitié, du cylindre, cet orifice débouchant sur une première base de celui-ci, et un second orifice 13 ménagé dans une seconde partie, ou moitié, du cylindre, débouchant sur une seconde base de celui-ci, opposée à la première.

Les orifices 12, 13 sont de forme oblongue et de section allongée, mais les directions longitudinales de leurs sections respectives sont perpendiculaires. Dans leurs directions longitudinales respectives, ces orifices sont de même dimension. Leurs dimensions dans la direction transversale sont cependant différentes, l'orifice 13 étant plus large que l'orifice 12.

La bordure de chaque orifice 12, 13 est délimitée respectivement par un conduit 14, 15. La dimension minimale de la matière plastique au voisinage d'un point du conduit 14, 15, mesurée selon toutes les directions passant par ce point, est inférieure à 4 mm, de préférence à 2 mm. La section du conduit 14, 15 est donc inférieure à celle d'un conduit de l'état de la technique, en raison de la diminution de l'épaisseur de matière.

La pièce 10 comprend également des nervures longitudinales 16, 17 de renfort, permettant d'améliorer les propriétés mécaniques de la pièce. Les nervures 16, 17 sont respectivement d'un seul tenant avec au moins un conduit 14, 15. Elles s'étendent à l'extérieur de ce conduit 14, 15, sur toute la hauteur de celui-ci, perpendiculairement à la direction longitudinale de la section de l'orifice 12, 13 délimité par ce conduit 14, 15.

La pièce 10 comprend également un disque 18, agencé entre les deux conduits 14, 15. Il forme un fond partiel pour les orifices 12, 13 et est ajouré en son centre, de sorte que les orifices 12, 13 communiquent au voisinage de leurs axes. Ce disque 18 forme également une nervure de renfort de la pièce 10, permettant d'améliorer les propriétés mécaniques de la pièce.

La dimension minimale de la matière plastique au voisinage d'un point d'une nervure 16, 17, 18 , mesurée selon toutes les directions passant par ce point, est inférieure à 4 mm, de préférence à 2 mm. Les nervures 16, 17, 18 sont d'épaisseur sensiblement égale à la section du conduit 14, 15, de sorte que l'épaisseur de la matière constituant la pièce est essentiellement constante.

Il est bien entendu que le mode de réalisation qui vient d'être décrit ne présente aucun caractère limitatif et qu'il pourra recevoir toutes modifications désirables sans sortir pour cela du cadre de l'invention.

En variante, la pièce est fabriquée en matériau tel que le PEEK (Polyetherethercétone), le PPS (Polysulfure de Phénylène), le PAI (Polyamide-imide) ou le PEI (Polyetherimide) ;

La disposition des nervures peut également être différente de celle du mode de réalisation décrit : plusieurs nervures peuvent par exemple être disposées en parallèle d'un même côté d'un conduit et/ou la pièce peut ne pas comprendre de disque.

## Revendications

1. Pièce (10) en matière plastique formant noix d'Oldham, la pièce comprenant deux orifices (12, 13) coaxiaux prévus chacun pour la réception d'un arbre rotatif, dans laquelle l'épaisseur de matière plastique en tout point de la pièce, c'est à dire la dimension minimale de la matière plastique au voisinage du point, mesurée selon toutes les directions passant par ce point, est inférieure à 2 mm,
la pièce étant **caractérisée en ce que**
- les deux orifices (12, 13) sont de section allongée, les directions longitudinales des sections des deux orifices étant perpendiculaires
- la bordure (12, 13) de chaque orifice est délimitée par un conduit (14, 15) chaque conduit (14, 15) étant de section allongée.

2. Pièce selon la revendication précédente, comprenant au moins une nervure de renfort (16, 17, 18) d'un seul tenant avec le conduit (14, 15).

3. Pièce selon la revendication 2, dans laquelle la nervure (16, 17) s'étend à l'extérieur du conduit (14, 15) sur toute la profondeur du conduit.

4. Pièce selon l'une des revendications 2 ou 3, dans laquelle la nervure est constituée par un disque (18) formant un fond au moins partiel pour les orifices (12, 13) de la pièce (10).

5. Pièce selon l'une quelconque des revendications précédentes, réalisée en matériau polymère chargé de fibres de verre ou de carbone.

6. Pièce selon la revendication 5, dans laquelle le polymère est du PEEK (Polyetherethercétone), du PA (Polyamide), du PPA (Polyphtalamide), du PPS (Polysulfure de Phénylène), du PAI (Polyamide-imide) ou du PEI (Polyetherimide).

7. Pièce selon l'une quelconque des revendications précédentes, destinée à être mise en oeuvre dans un système de direction assistée d'un véhicule automobile.

## Claims

1. Part (10) made from plastic material forming an Oldham nut, the part comprising two coaxial holes (12, 13) each designed to accommodate a rotating shaft, in which the thickness of plastic at all points of the part, i.e. the minimum dimension of the plastic material near the point, measured in all directions crossing through this point, is less than 2 mm,
the part being **characterised in that**
- the two holes (12, 13) are of elongated cross-section, the longitudinal directions of the cross-sections of the two holes being perpendicular.
- the edge (12, 13) of each hole is bounded by a tube (14, 15), each tube (14, 15) being of elongated cross-section.

2. Part according to the preceding claim, comprising at least one reinforcement rib (16, 17, 18) made in one piece with the tube (14, 15).

3. Part according to claim 2, wherein the rib (16, 17) extends outside the tube (14, 15) over the entire depth of the tube.

4. Part according to claim 2 or 3, wherein the rib consists of a disc (18) forming a bottom, at least partial, for the holes (12, 13) of the part (10).

5. Part according to any of the preceding claims, made from polymer material loaded with glass or carbon fibres.

6. Part according to claim 5, wherein the polymer is PEEK (Polyetheretherketone), PA (Polyamide), PPA (Polyphthalamide), PPS (phenylene polysulphide), PAI (Polyamide-imide) or PEI (Polyetherimide).

7. Part according to any of the preceding claims, designed to be implemented in an automobile power steering system.

## Patentansprüche

1. Kunststoffteil (10), das eine Oldham-Kupplung bildet, wobei das Teil zwei koaxiale Öffnungen (12, 13) umfasst, die jeweils zur Aufnahme einer Drehwelle vorgesehen sind, wobei die Kunststoffdicke an jedem Punkt des Teils, also die Mindestabmessung des Kunststoffs in der Umgebung des Punkts, gemessen nach allen durch diesen Punkt verlaufenden Richtungen, kleiner als 2 mm ist,
wobei das Teil **dadurch gekennzeichnet ist, dass**
- die beiden Öffnungen (12, 13) einen länglichen Querschnitt aufweisen, wobei sich die Längsrichtungen der Querschnitte der beiden Öffnungen perpendikular verhalten,
- der Rand (12, 13) jeder Öffnung von einem Kanalteil (14, 15) begrenzt ist, wobei jedes Kanalteil (14, 15) einen länglichen Querschnitt aufweist.

2. Teil nach dem vorstehenden Anspruch, das zumindest eine Verstärkungsrippe (16, 17, 18) aus einem Stück mit dem Kanalteil (14, 15) umfasst.

3. Teil nach Anspruch 2, wobei sich die Rippe (16, 17) außerhalb des Kanalteils (14, 15) über die gesamte Tiefe des Kanalteils erstreckt.

4. Teil nach Anspruch 2 oder 3, wobei die Rippe aus einer Scheibe (18) besteht, die einen zumindest teilweisen Boden für die Öffnungen (12, 13) des Teils (10) bildet.

5. Teil nach einem der vorstehenden Ansprüche, das aus mit Glas- oder Kohlenstofffasern verstärktem Polymermaterial hergestellt ist.

6. Teil nach Anspruch 5, wobei das Polymer PEEK (Polyetheretherketon), PA (Polyamid), PPA (Polyphthalamid), PPS (Polyphenylensulfid), PAI (Polyamidimid) oder PEI (Polyetherimid) ist.

7. Teil nach einem der vorstehenden Ansprüche, zur Anwendung in einem Servolenksystem eines Kraftfahrzeugs.
